# EUROPÄISCHE PATENTSCHRIFT

(11) **EP 0 330 164 B1**
(45) Veröffentlichungstag und Bekanntmachung des Hinweises auf die Patenterteilung: **25.08.1993**
(21) Anmeldenummer: 89103065.2
(22) Anmeldetag: 22.02.1989
(51) Int. Cl.: G08G 1/097

(54) **Einrichtung zur Teilabschaltung einer Strassenverkehrssignalanlage**
Partial traffic-signalling system disconnecting device
Dispositif de mise hors circuit partielle d'un système de signalisation routière

(30) Priorität: 25.02.1988 DE 3805949
(43) Veröffentlichungstag der Anmeldung: 30.08.1989
(73) Patentinhaber: SIEMENS AKTIENGESELLSCHAFT, 80333 München (DE)
(72) Erfinder: Baumgartl, Franz, D-8000 München 21 (DE); Käsgen, Birgitt, D-8911 Issing (DE); Grimm, Dieter, D-8000 München 71 (DE); Wenter, Peter, D-8000 München 70 (DE)

(56) Entgegenhaltungen:
- EP-A- 0 137 964
- EP-A- 0 251 097
- US-A- 4 135 145

## Beschreibung

Die Erfindung bezieht sich auf eine Einrichtung zur Teilabschaltung einer Straßenverkehrssignalanlage mit mehreren Signalgebern bzw. Signalgruppen und einem Knotensteuergerät, welches eine Signalsteuereinrichtung und eine zugeordnete, mikroprozessorgesteuerte Überwachungseinrichtung zur Signalsicherung mit zumindest zwei Mikroprozessoren mit zugeordneten Programm- und Datenspeichern, mit mehreren gruppenweise zusammenfaßbaren Sensor- und Lampenschaltern und mit einer fehlersicheren Auswerteschaltung aufweist.

Bei Straßenverkehrssignalanlagen ist ein zusätzlicher Schutz gegen verkehrsgefährdende Signalisierungszustände zwingend notwendig. Es ist bekannt, dazu in jedem Verkehrsknotensteuergerät eine eigenständige Einheit bzw. eine eigene Signalsicherung vorzusehen, die Lampenstromkreise auf feindliche Signalisierungszustände überwacht. Erkennt die Signalsicherung einen gefährdeten Signalisierungszustand, so wird die Straßenverkehrssignalanlage abgeschaltet bzw. auf Gelbblinken geschaltet. Dies ist insbesondere bei großen Verkehrsknoten nachteilig, denn bei der abgeschalteten Anlage kann nur mit Hilfe von Verkehrspolizisten der Verkehr geregelt werden oder die Verkehrssignalanlage bleibt abgeschaltet und der Verkehrsknotenpunkt wird nicht geregelt. Beides stellt eine erhöhte Unfallgefahr dar.

Bei solchen großen Anlagen wäre es daher sinnvoll, im Störungsfall nicht die gesamte Anlage auszuschalten, sondern nur den Teil, dessen Signalisierung gestört ist, z.B. nur die Signale eines abseits liegenden Fußgängerüberweges. Bisher wurden solche komplexen Anlagen von mehreren, voneinander unabhängigen Knotenpunktgeräten gesteuert. Dies führt bei einer zentralen Steuerung der Straßenverkehrsanlage durch einen Verkehrsrechner zu keinen besonderen Problemen. Da aber heute in zunehmendem Maße intelligente Knotenpunktgeräte mit örtlicher, verkehrsabhängiger Steuerung eingesetzt werden, ist eine Aufteilung in mehrere Steuergeräte nicht mehr möglich, denn die Steuerung der einzelnen Teilknoten kann nicht unabhängig voneinander durchgeführt werden. Eine Synchronisierung mehrerer verkehrsabhängig gesteuerter Knotenpunktgeräte ohne Verkehrsrechner ist äußerst schwierig und sehr aufwendig.

Aus der DE-A-34 28 444 ist eine mikroprozessorgesteuerte Überwachungseinrichtung für Straßenverkehrssignalanlagen mit mehreren Sensorgruppen und einer fehlersicheren Auswerteschaltung bekannt, bei der zur Signalsicherung von den Sensorschaltungen erfaßte (z.B. abgetastete) Signalisierungszustände (Betriebswechselspannungen und -ströme) mit Referenzsignalen zu vergleichen sind. Bei fehlerfreier Arbeitsweise der Straßenverkehrsignalanlage und/oder der Überwachungseinrichtung gibt jeder Mikroprozessor gleiche Taktimpulse in Impulsfolgen ab, aber mit gegeneinander um 180° verschobener Phasenlage. Diese werden in der fehlersicheren Auswerteschaltung ausgewertet. Bei einer Störung oder einem Fehler wird die gesamte Straßenverkehrssignalanlage

Aus den beiden Dokumenten EP-A-0 137 964 und EP-A-0-251 097 sind jeweils Signalsicherungsanlagen bekannt, bei denen bei Auftreten einer Fehlfunktion die Signalanlage entweder vollständig oder teilweise abgeschaltet bzw. auf Gelbblinken umgeschaltet wird.

Aufgabe der Erfindung ist es, eine Straßenverkehrssignalanlage mit einer derartigen Überwachungseinrichtung derart auszubilden, daß einzelne Bereiche der Straßenverkehrssignalanlage, also Teilknoten, unabhängig abgeschaltet werden können, wenn in einem Teilbereich der Straßenverkehrssignalanlage, d.h. für einen Teilknoten, eine Störung auftritt.

Diese Aufgabe wird bei einer eingangs beschriebenen Einrichtung erfindungsgemäß dadurch gelöst, daß zur Bildung mehrerer Teilknoten im Knotensteuergerät eine einzige, allen Teilknoten gemeinsame Gerätesteuerung und gemeinsame Signalsicherungs-Baugruppe und für jeden Teilknoten eine eigene Auswerte-Baugruppe und eigene Lampenschalter-Gruppen mit einer Abschaltvorrichtung für die zugehörigen Signalgeber vorgesehen sind, daß die einzelnen Lampenschalter der Lampenschaltergruppen von der Gerätesteuerung angesteuert und von der Signalsicherungs-Baugruppe über einen Adress- und Sensorbus überwacht werden, und daß die mit der Signalsicherungs-Baugruppe verbundenen Auswerte-Baugruppen voneinander unabhängig im Falle einer Störung eines Teilknotens an die betreffende Lampenschalter-Gruppe bzw. Abschaltvorrichtung ein Abschaltsignal bzw. Umschaltsignal auf Gelbblinken geben.

Die Straßenverkehrssignalanlage weist eine für alle Teilknoten gemeinsame Signalsicherung mit einer gemeinsamen Steuerlogik aber getrennte Auswerteeinrichtungen und Abschaltwege auf. Das heißt, der Grundteil der Signalsicherung bleibt gleich, lediglich die fehlersicheren Abschaltwege sind für die einzelnen Teilknoten getrennt vorgesehen. Daraus ergibt sich der Vorteil einer wesentlich einfacheren Geräteausstattung mit übersichtlichem Aufbau und einer zentralen Fehleranzeige und Meldemöglichkeit.

Ein weiterer Vorteil ist dadurch gegeben, daß der abgeschaltete Knoten weiterhin von der Signalsicherungsbaugruppe über die Lampenschalter und die Auswertebaugruppen überwacht wird. Tritt beispielsweise aufgrund eines Kabelschlusses in dem abgeschalteten Teilknoten ein Grünsignal auf, das zu einer gefährlichen Konfliktsituation der gesamten Kreuzung führt, so wird über ein Notaussignal die gesamte Anlage abgeschaltet.

Weitere Einzelheiten und Vorteile der Erfindung ergeben sich aus der Erläuterung an einem Ausführungsbeispiel anhand der Zeichnungen. Dabei zeigen
Fig. 1 eine bekannte Steuerung zweier Straßenverkehrssignalanlagen mit Hilfe eines Verkehrsrechners,
Fig. 2 eine schematische Darstellung der Erfindung,
Fig. 3 ein Blockschaltbild der Einrichtung und
Fig.4 schematisch die Signalsicherungsbaugruppe.

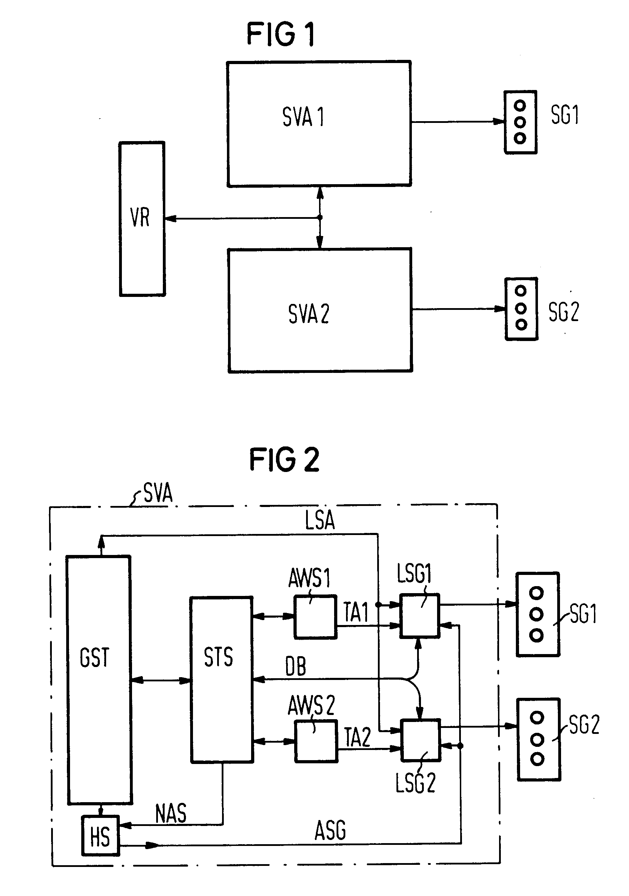

In Fig. 1 ist blockschaltbildmäßig dargestellt, wie bisher ein sehr großer Verkehrsknoten mit beispielsweise zwei Straßenverkehrssignalanlagen SVA1 und SVA2 mit den zugehörigen Signalgebern SG1 und SG2 mit Hilfe eines übergeordneten Verkehrsrechners VR gesteuert wurde.

In Fig.2 eine Straßenverkehrssignalanlage SVA angedeutet. Das Knotensteuergerät weist eine Gerätesteuerung GST (Steuerteil) auf, das einerseits im Datenaustausch mit der Signalsicherungsbaugruppe STS steht. Anderseits ist die Gerätesteuerung mit den jeweiligen Lampenschaltergruppen LSG1, LSG2 für die Teilknoten LSG1,LSG2, verbunden, wobei für die einzelnen Lampenschalter der Lampenschaltergruppen die Ansteuerungssignale LSA von der Gerätesteuerung GST übertragen werden. Sämtliche Lampenschalter sind mit einem Sensorbus SB und einem Adressbus AB, hier als ein einziger Datenbus DB gezeigt, mit der Signalsicherungsbaugruppe STS verbunden. Die für jeden Teilknoten vorgesehene Auswertebaugruppe AWS1, AWS2,... steht im Datenaustausch mit der Signalsicherungsbaugruppe und geben andererseits im Falle einer Störung eines Teilknotens das Abschaltsignal TA1, TA2,... an die betreffende Lampenschaltergruppe LSG1, LSG2, ..., so daß die zugehörigen Signalgeber SG1, SG2, ... abgeschaltet bzw. auf Gelbblinken geschaltet werden.

Wie schon erläutert, wird auch bei einem abgeschalteten Teilknoten dieser weiterhin überwacht, so daß bei einem plötzlich auftretenden und von der gemeinsamen Signalsicherung STS erkannten gefährlichen Signalbild die gesamte Straßenverkehrssignalanlage SVA abgeschaltet wird. Dies ist schematisch in Fig.2 gezeigt. Erhält der Hauptschalter HS von der Signalsicherungsbaugruppe STS ein Notaussignal NAS, so wird mit Hilfe des von dem Hauptschalter HS abgegebenen Abschaltsignals ASG für den Gesamtknoten die gesamte Straßenverkehrsanlage SVA abgeschaltet.

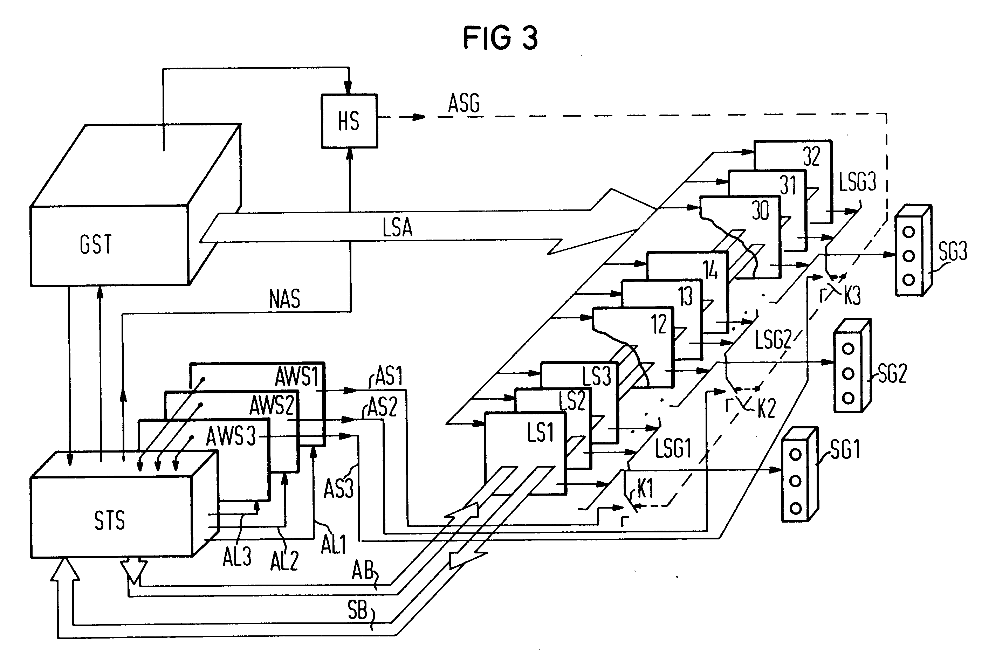

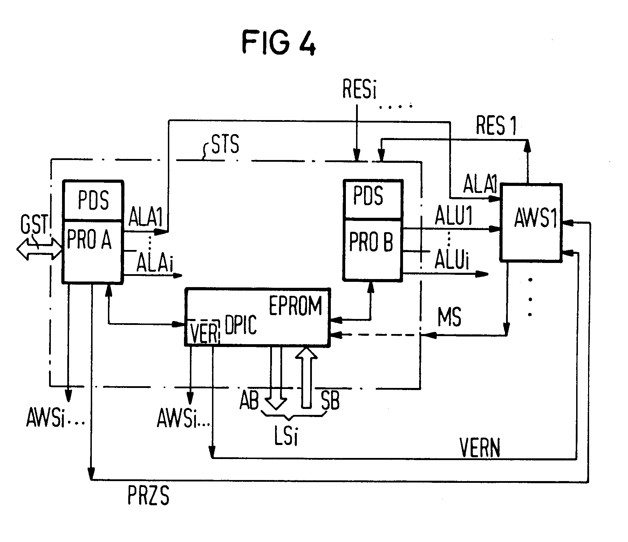

Anhand der Figuren 3 und 4 wird die erfindungsgemäße Einrichtung und die Wirkungsweise beschrieben. Jeder Lampenschalter LS1, LS2, ... weist Schalter und Sensoren für die Überwachung der Ströme (drei Rotlampenstromkreise) und Spannungen (rot, gelb und grün) der Signalgeber auf. Die Ausgänge der Spannungs- und Stromsensoren führen auf den gemeinsamen Sensorbus SB. Dieser ist von den einzelnen Lampenschaltern LS1, LS2, ... über einen Dual-Port-Schaltkreis DPIC auf der Signalsicherungsbaugruppe STS geführt. Der Dual-Port-Schaltkreis DPIC kann ein anwenderspezifisches IC sein. Über diesen Schaltkreis gelangen die Sensorsignale zu den zwei Mikroprozessoren PROA und PROB auf der Signalsicherungsbaugruppe STS. Dabei ist der Mikroprozessor PROA hauptsächlich für die Bearbeitung von anwendungsspezifischen Daten, wie beispielsweise Feindlichkeitsmatrix, vorgesehen, während der Mikroprozessor PROB anwendungsunabhängige Daten, wie beispielsweise Signalerfassung, Systemprüfung verarbeitet. Der Einsatz der DualPort-Schaltkreises DPIC erübrigt eine aufwendige Verdrahtung der einzelnen Sensorschaltungen. Durch den Einsatz der Mikroprozessoren ergibt sich auch der Vorteil einer komfortablen Anzeige von Fehler- bzw. Störungsmeldungen. Insgesamt läßt sich durch diese erfindungsgemäße Einrichtung das System kostengünstiger realisieren.

Die Arbeitsweise der beiden Mikroprozessoren und die unmittelbare Auswertung der von ihnen abgegebenen Signale ist an sich aus der oben schon genannten deutschen Offenlegungsschrift DE-A-34 28 444 bekannt. Die sichere Arbeitsweise der Signalsicherung rührt einerseits aus der Verknüpfung der Prozessor-Prüfroutinen beider Prozessoren mit einer überwachenden, fehlersicher aufgebauten Auswerteschaltung und andererseits über die Erfassung der Sensordaten mit Hilfe fehlersicherer Sensoren her. Eine fehlersichere Überwachungsschaltung, wie sie in jeder Auswertebaugruppe AWS1, AWS2,... vorgesehen ist, ist in der EP-A-0 287 991 (veröffentlicht aus 26.10.1988) bereits beschrieben.

Auf der jeweiligen Auswertebaugruppe AWS1, AWS2,... werden die Referenzspannungen RES1, ... für die einzelnen Signalgeber überwacht und an die Signalsicherungsbaugruppe STS gegeben, wo sie mit den Referenzsignalen von den Spannungssensoren verarbeitet und ausgewertet werden. Durch einen weiteren Datenaustausch innerhalb der Signalsicherungsbaugruppe und mit den jeweiligen Auswertebaugruppen wird die sichere Arbeitsweise der Signalsicherung und damit auch der beiden Mikroprozessoren überwacht. Beispielsweise prüft der Mikroprozessor PROB die Funktion der Bearbeitung der Feindlichkeitsmatrix und die Alarmerzeugung des Prozessors PROA.

Durch diese Prüfung werden also bei fehlerfreiem Arbeiten der Straßenverkehrssignalanlage in regelmäßigen Abständen vom Mikroprozessor PROA Alarmsignale ALA1, ALA2,... und vom Mikroprozessor PROB Alarmunterdrückungssignale ALU1, ALU2,... an die jeweilige Auswertebaugruppe AWS1, AWS2, ... gegeben, wobei in einem fehlersicheren EXOR diese Signale ausgewertet werden. Bleibt das Alarmunterdrückungssignal ALU für eine bestimmte Zeit aus, so spricht die Signalsicherungseinrichtung STS an, d.h. die betreffende Auswertebaugruppe AWS gibt ein Abschaltsignal AS an den entsprechenden Abschaltkontakt, d.h., daß beispielsweise das Relais K1 für den betroffenen Teilknoten abfällt.

In Fig.3 sind schematisch das Steuerteil des Knotensteuergeräts in Form der Gerätesteuerung GST, die zugehörigen Lampenschalter in Form von einer Reihe von jeweiligen Lampenschalterbaugruppen LSG1 bis LSG3 und die Signalsicherungsbaugruppe STS gezeigt. Die einzelnen Lampenschalter LS1, LS2,... sind hier zusammengefaßt für drei Teilknoten, die mit einem jeweiligen Signalgeber SG1 bis SG3 für den Teilbereich einer Kreuzung gekennzeichnet sind. Der Abschaltweg eines jeweiligen Teilknotens ist mit den Kontakten K1 bis K3 angedeutet. Die einzelnen Lampenschalter LS werden von der Gerätesteuerung GST mit Hilfe der Lampenschalteransteuerung LSA geschaltet. Die Lampenschalter sind einerseits mit einem Adressbus AB und andererseits mit dem Sensorbus SB mit der Signalsicherungsbaugruppe STS verbunden. Für jeden Teilknoten ist eine eigene Auswertebaugruppe AWS1 bis AWS3 vorgesehen, die im bidirektionalen Datenaustausch mit der Signalsicherungsbaugruppe STS steht und andererseits im Falle einer Störung ein Ausschaltsignal AS2, AS3 an den betreffenden Abschaltkontakt K1 bis K3 des Teilknotens geben kann. Tritt eine Störung innerhalb eines Teilknotens auf und hat diese Störung keine Auswirkung auf den Gesamtknoten, was die gemeinsame Signalsicherung STS erkennt, so wird über die Auswertebaugruppe AWS der Teilknoten abgeschaltet. Erkennt die Signalsicherungsbaugruppe STS eine Fehlfunktion oder eine Störung, die den Gesamtknoten betrifft, so wird über ein Notaussignal NAS und dem Hauptschalter HS der Gesamtknoten abgeschaltet, was mit ASG und K1 bis K3 angedeutet ist.

Ergänzend sei noch erwähnt, daß der Dual-Port-Schaltkreis DTEC einen Vergleicher VER aufweisen kann, der von beiden Mikroprozessoren Daten erhält, um die richtige Arbeitsweise der Prozessoren und der Sicherungsbaugruppe zu überwachen. Der Ausgang der Vergleichers gibt ein Vergleichersignal VERN an die jeweilige Auswertegruppe AWS zu einer dort angeordneten Bewertungsschaltung. Dort werden die Signale aus dem Vergleichertest (VERN) und ein weiteres Signal SPRZ ausgewertet. Es wird das Puls/Pause-Verhältnis der jeweiligen Signale bewertet. Wird das Puls-Pausen-Verhältnis in unzulässiger Weise überschritten, oder bleibt das Vergleichssignal aus, so wird auf ein fehlerhaftes Verhalten des Mikroprozessors oder des Vergleichers geschlossen und der Gesamtknoten abgeschaltet.

## Patentansprüche

1. Einrichtung zur Teilabschaltung (TA) einer Straßenverkehrssignalanlage (SVA) mit mehreren Signalgebern (SG) bzw. Signalgruppen und einem Knotensteuergerät, welches eine Signalsteuereinrichtung und eine zugeordnete, mikroprozessorgesteuerte Überwachungseinrichtung zur Signalsicherung mit zumindest zwei Mikroprozessoren mit zugeordneten Programm- und Datenspeichern, mit mehreren, gruppenweise zusammenfaßbaren Sensor- und Lampenschaltungen und mit einer fehlersicheren Auswerteschaltung aufweist,
**dadurch gekennzeichnet,** daß zur Bildung mehrerer (i) Teilknoten im Knotensteuergerät eine einzige, allen Teilknoten gemeinsame Gerätesteuerung (GST) und gemeinsame Signalsicherungsbaugruppe (STS) und für jeden Teilknoten eine eigene Auswerte-Baugruppe (AWSi) und eigene Lampenschalter-Gruppen (LSGi) mit einer Abschaltvorrichtung (Ki) für die zugehörigen Signalgeber (SGi) vorgesehen sind, daß die einzelnen Lampenschalter (LSn) der Lampenschalter-Gruppen (LSGi) von der Gerätesteuerung (GST) angesteuert (LSA) und von der Signalsicherungs-Baugruppe (STS) über einen Adress- und Sensorbus (AB,SB) überwacht werden, und daß die mit der Signalsicherungs-Baugruppe (STS) verbundenen Auswerte-Baugruppen (AWSi) voneinander unabhängig im Falle einer Störung eines Teilknotens an die betreffende Lampenschalter-Gruppe (LSGi) bzw. Abschaltvorrichtung (Ki) ein Abschaltsignal bzw. Umschaltsignal auf Gelbblinken (TAi; ASi) geben.

2. Einrichtung nach Anspruch 1,
**dadurch gekennzeichnet,** daß der abgeschaltete Teilknoten von der Signalsicherungs-Baugruppe (STS) über die Lampenschalter (LSn) und die Auswerte-Baugruppe (AWS) weiterhin auf die den Gesamtknoten gefährdende Konfliktsituationen überwacht und in einem derartigen Störungsfall ein Not-Aus-Signal (NAS) an den Hauptschalter (HS) des Knotengerätes gegeben wird, wobei der Hauptschalter (HS) ein Abschaltsignal (ASG) an jede Abschaltvorrichtung (Ki) eines Teilknotens gibt.

3. Einrichtung nach Anspruch 1 oder 2,
**dadurch gekennzeichnet,** daß die zwei Mikroprozessoren (PRO A, PRO B) der Signalsicherungs-Baugruppe (STS) untereinander über einen Dual-Port-Schaltkreis (DPIC) verbunden sind, daß der Dual-Port-Schaltkreis (DPIC) mit den Lampenschaltern (LSn) und den jeweiligen Auswerte-Baugruppen (AWSi) verbunden ist, daß die Signalsicherungs-Baugruppe (STS) mit Hilfe der beiden Mikroprozessoren die Signalbilder hinsichtlich Feindlichkeit, Signaldauer, Phasenlage, Signalspannungen etc. der Signalgeber und die Systemfunktionen überwacht und in einem Vergleicher (VER) des Dual-Port-Schaltkreises (DPIC) vergleicht, und daß auf der Auswerte-Baugruppe (AWSi) die von den beiden Mikroprozessoren und den Dual-Port-Schaltkreis abgegebenen Prüfsignale für jede Teilkreuzung auf der entsprechenden Auswertebaugruppe (AWSi) mittels eines fehlersicheren EXOR (logische Verknüpfungsschaltungen) und weiteren Überwachungsschaltungen ausgewertet werden, wobei im Störungsfall der betreffende Teilknoten abgeschaltet wird.

## Claims

1. Device for partially disconnecting (TA) a traffic-signalling system (SVA) having a plurality of signal generators (SG) or signal groups and a node control device which has a signal control device and an associated, microprocessor-controlled monitoring device for signal protection having at least two microprocessors with associated program memories and data memories, having a plurality of sensor circuits and lamp circuits which can be combined in groups and having a failsafe evaluation circuit, characterised in that in order to form a plurality (i) of sub-nodes in the node control device a single device control (GST) which is common to all sub-nodes and a common signal protection assembly (STS) and a separate evaluation assembly (AWSi) for each sub-node and separate lamp-switch groups (LSGi) with a switch-off device (Ki) for the associated signal generators (SGi) are provided, in that the individual lamp switches (LSn) of the lamp-switch groups (LSGi) are driven (LSA) by the device control (GST) and are monitored by the signal protection assembly (STS) via an address and sensor bus (AB, SB), and in that the evaluation assemblies (AWSi) which are connected to the signal protection assembly (STS) transmit, independently of one another, a switch-off signal or switch-over signal to amber flashing (TAi; ASi) to the respective lamp-switch group (LSGi) or switch-off device (Ki) in the case of a fault of a sub-node.

2. Device according to Claim 1, characterised in that the switched-off sub-node continues to be monitored for conflict situations which jeopardize the entire node by the signal protection assembly (STS) via the lamp switches (LSn) and the evaluation assembly (AWS), and in the case of such a fault, an emergency shut-off signal (NAS) is transmitted to the main switch (HS) of the node device, the main switch (HS) transmitting a switch-off signal (ASG) to each switch-off device (Ki) of a sub-node.

3. Device according to Claim 1 or 2, characterised in that the two microprocessors (PRO A, PRO B) of the signal protection assembly (STS) are connected to one another via a dual-port circuit (DPIC), in that the dual-port circuit (DPIC) is connected to the lamp switches (LSn) and to the respective evaluation assemblies (AWSi), in that the signal protection assembly (STS) monitors, with the aid of the two microprocessors, the signal indications, with respect to incompatibility, signal length, phase position, signal voltages etc. of the signal generators, and the system functions and compares them in a comparator (VER) of the dual-port circuit (DPIC), and in that, on the evaluation assembly (AWSi), the test signals for each sub-intersection, which signals are transmitted by the two microprocessors and the dual-port circuit, are evaluated on the appropriate evaluation assembly (AWSi) by means of a failsafe EXOR (logic connection circuits) and further monitoring circuits, the respective sub-node being switched off in the event of a fault.

## Revendications

1. Dispositif pour réaliser le débranchement partiel (TA) d'une installation de signalisation du trafic routier (SVA) comportant plusieurs feux (SG) ou groupes de feux et un appareil de commande nodal qui comporte un dispositif de commande des feux et un dispositif de contrôle associé, commandé par le microprocesseur pour la protection des feux et comportant au moins deux microprocesseurs, auxquels sont associés des mémoires de programmes et de données, et des circuits de capteurs et de lampes, qui sont réunis par groupes, et un circuit d'évaluation protégé contre les erreurs,
caractérisé par le fait que pour la formation de plusieurs (i) noeuds partiels dans l'appareil de commande nodal, il est prévu une seule unité de commande d'appareil (GST), commune à tous les noeuds partiels, et un seul module commun (STS) de protection des feux et, pour chaque noeud partiel, un module particulier d'évaluation (AWSi), et des groupes particuliers (LSGi) d'interrupteurs des lampes, comportant un dispositif de débranchement (Ki) pour le feu associé (SGi), que les différents interrupteurs des lampes (LSn) des groupes (LSGi) d'interrupteurs de lampes sont commandés (LSA) par l'unité de commande d'appareil (GST) et sont contrôlés par le module (STS) de protection des feux, par l'intermédiaire d'un bus de transmission d'adresses et de détection (AB,SB), et que les modules d'évaluation (AWSi), qui sont raccordés au module (STS) de protection des feux, envoient indépendamment les uns des autres un signal de débranchement ou un signal de commutation sur le feu jaune clignotant (TAi; ASi), dans le cas d'une défaillance d'un noeud partiel dans le groupe concerné (LSGi) d'interrupteurs de lampes ou dans le dispositif de débranchement concerné (Ki).

2. Dispositif suivant la revendication 1, caractérisé en outre par le fait que l'apparition d'éventuelles situations conflictuelles soumettant à un risque le noeud global est contrôlée dans le noeud partiel débranché, par le module (STS) de protection des feux, par l'intermédiaire des interrupteurs de lampes (LSn) et du module d'évaluation (AWS), et que, dans un tel cas de défaillance, un signal d'arrêt d'urgence (NAS) est appliqué à l'interrupteur principal (HS) de l'appareil nodal, l'interrupteur principal (HS) envoyant un signal de débranchement (ASG) à chaque dispositif de débranchement (Ki) d'un noeud partiel.

3. Dispositif suivant la revendication 1 ou 2, caractérisé par le fait que les deux microprocesseurs (PRO A, PRO B) du module (STS) de protection des feux sont reliés entre eux par l'intermédiaire d'un circuit à deux ports (DPIC), que le circuit à deux ports (DPIC) est raccordé aux interrupteurs de lampes (LSn) et aux modules respectifs d'évaluation (AWSi), que le module (STS) de production des feux contrôle, à l'aide des deux microprocesseurs, des images de signaux, pour ce qui concerne l'incompatibilité, la durée du signal, la position de phase, des tensions de signal, etc., des générateurs de signaux, et les fonctions du système et les compare dans un comparateur (VAE) du circuit à deux ports (DPIC), et que dans le module d'évaluation (AWSi), les signaux de contrôle, qui sont délivrés par les deux microprocesseur et par le circuit à deux ports, sont évalués pour chaque croisement partiel, dans le module correspondant d'évaluation (AWSi), au moyen d'une porte OU-EXCLUSIF (circuit combinatoire logique), protégée contre les erreurs, et au moyen d'autres circuits de contrôle, le noeud partiel considéré étant débranché dans le cas d'une perturbation.
